# EUROPEAN PATENT SPECIFICATION

(11) **EP 2 350 963 B1**
(45) Date of publication and mention of the grant of the patent: **20.11.2013**
(21) Application number: 09816781.0
(22) Date of filing: 23.09.2009
(51) Int. Cl.: G06F 17/28, H04L 12/58

(54) **DYNAMICALLY TRANSFORMING DATA TO THE CONTEXT OF AN INTENDED RECIPIENT**
DYNAMISCHE DATENUMWANDLUNG FÜR DEN KONTEXT EINES VORGESEHENEN EMPFÄNGERS
TRANSFORMATION DYNAMIQUE DE DONNEES SELON LE CONTEXTE D'UN DESTINATAIRE ESCOMPTE

(30) Priority: 29.09.2008 US 239817 P
(43) Date of publication of application: 03.08.2011
(73) Proprietor: Microsoft Corporation, Redmond, WA 98052-6399 (US)
(72) Inventor: KUNZ, Michael, C., Redmond, Washington 98052-6399 (US); ESTES, Chad, Steven, Redmond, Washington 98052-6399 (US)
(74) Representative: Goddar, Heinz J.
(86) International application number: PCT/US2009/057995
(87) International publication number: WO 2010/036688

(56) References cited:
- WO-A2-2008/025645
- US-A- 6 018 764
- US-A1- 2003 125 927
- US-A1- 2004 205 118
- US-A1- 2006 069 728
- US-A1- 2008 056 470
- US-A1- 2008 059 421
- US-B2- 7 171 348

## Description

### BACKGROUND

Each and every day greater numbers of people are utilizing electronic methods of communication. For instance, every day millions of people utilize electronic mail ("e-mail"), instant messaging, and short messaging service ("SMS") messages to communicate with one another. People also exchange millions of messages each day through other types of communication services, like social networking World Wide Web ("Web") sites and micro-blogging services. These methods of communication have revolutionized the manner in which people communicate today.

One shortcoming of today's methods for exchanging messages stems from the fact that the data contained in messages generated by these methods is generally static. As a result, it is common for a recipient of a message to be required to translate some of the data contained within a message into a more useful form for their current context. For instance, the sender of a message may include data in the message that is expressed with reference to their own context. Driving directions to a destination, as an example, may be defined with reference to the geographic location of the message sender. When the intended recipient receives the message, the recipient must transpose the directions to their own context. For example, the recipient might have to redefine the starting point for the driving directions to his or her own geographical location.

It is typically necessary, therefore, for either the sender or the recipient of a message created using today's messaging technologies to express data contained within the message with reference to the context of the recipient for the data to be most useful. This additional effort, however, can be time consuming for either the sender or the recipient of a message.

It is with respect to these considerations and others that the disclosure made herein is presented.
US 2004/0205118 A1 discloses a a system and method for programmatic localization of an electronic document sent to a user across a network. The method includes the step of determining a localization context for the user, retrieving the electronic document for the user to view and assembling the electronic document's design based on the localization context for the user.
US 2003/0125927 A1 discloses a method and system translating instant messages between users who communicate in different languages. The source language corresponds to the preferred language of the user of the device that sends messages during the session, while the destination language corresponds to the preferred language of the user of a device that receives sent messages.
WO 2008/025645 A2 discloses targeting a shorthand term in a text message and searching data bases for corresponding longhand terms and selecting longhand terms for display according to factors, such as user preferences, the identities of participants to the text communication and the context of the text message.

### SUMMARY

Concepts and technologies are described herein for dynamically transforming data to the context of an intended recipient. Through the implementations presented herein, the sender of a message can express data contained within the message with reference to their own context and specify that the data be transformed to the context of an intended recipient. The data contained in the message is then transformed in an automated fashion to the context of the recipient at or prior to the time the message is delivered to the recipient. This frees both the sender and the recipient of the message from the time consuming task of transforming the data in the message to the appropriate context.

According to embodiments presented herein, a sender can create a message for transmission to an intended recipient. For instance, the sender may create an e-mail message, instant message, SMS message, or other type of message for transmission to a recipient. During creation of the message, the sender may insert data into the message that is expressed with reference to the context of the sender. For example, the sender may insert data into the message with reference to their own geographic location, language, culture, market, age, gender, personal preferences, network bandwidth, computing capabilities, or other contextual information.

When the sender inserts data into a message that is expressed with reference to their own context, they may be asked whether the data should be dynamically transformed to the context of the intended recipient. If the sender indicates that the data should be transformed to the context of the intended recipient, the context of the intended recipient is determined. For instance, the geographic location, age, gender, personal preferences, network bandwidth, computing capabilities, or other contextual information of the intended recipient may be determined. The context of the intended recipient may be determined at the time the message is sent by the sender, at the time the message is received by the intended recipient, or at a time between when the message is sent and the time the message is received.

Once the context of the intended recipient has been determined, the data in the message is transformed to the context of the intended recipient. For instance, driving directions inserted into a message expressed from the perspective of the geographic location of the message sender would be transformed to the perspective of the geographic location of the recipient. As another example, the price for an item in one currency inserted into a message would be converted into an appropriate currency for a message recipient located in another country. Other types of transformations may also be performed.

It should be appreciated that while the embodiments presented herein are described with respect to certain types of electronic messages, the concepts and technologies presented herein may be utilized to transform any type of electronic communication. It should also be appreciated that the above-described subject matter may also be implemented as a computer-controlled apparatus, a computer process, a computing system, or as an article of manufacture such as a computer-readable medium. These and various other features will be apparent from a reading of the following Detailed Description and a review of the associated drawings.

This Summary is provided to introduce a selection of concepts in a simplified form that are further described below in the Detailed Description. This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIGURE 1 is a network diagram showing aspects of an illustrative operating environment and several software components provided by the embodiments presented herein;

FIGURES 2A-2B are user interface diagrams showing aspects of one illustrative user interface provided herein for specifying that data contained in a message should be transformed from the context of a sender to the context of an intended recipient;

FIGURE 3 is a flow diagram showing aspects of an illustrative routine provided herein for dynamically transforming data in a message from the context of a message sender to the context of an intended recipient of the message; and

FIGURE 4 is a computer architecture diagram showing an illustrative computer hardware and software architecture for a computing system capable of implementing aspects of the embodiments presented herein.

### DETAILED DESCRIPTION

The following detailed description is directed to concepts and technologies for dynamically transforming data from the context of a message sender to the context of an intended recipient of the message. While the subject matter described herein is presented in the general context of program modules that execute in conjunction with the execution of an operating system and application programs on a computer system, those skilled in the art will recognize that other implementations may be performed in combination with other types of program modules. Generally, program modules include routines, programs, components, data structures, and other types of structures that perform particular tasks or implement particular abstract data types. Moreover, those skilled in the art will appreciate that the subject matter described herein may be practiced with other computer system configurations, including hand-held devices, multiprocessor systems, microprocessor-based or programmable consumer electronics, minicomputers, mainframe computers, and the like.

In the following detailed description, references are made to the accompanying drawings that form a part hereof, and which are shown by way of illustration specific embodiments or examples. Referring now to the drawings, in which like numerals represent like elements through the several figures, aspects of a computing system and methodology for dynamically transforming data expressed with respect to the context of a sender to the context of a recipient will be described.

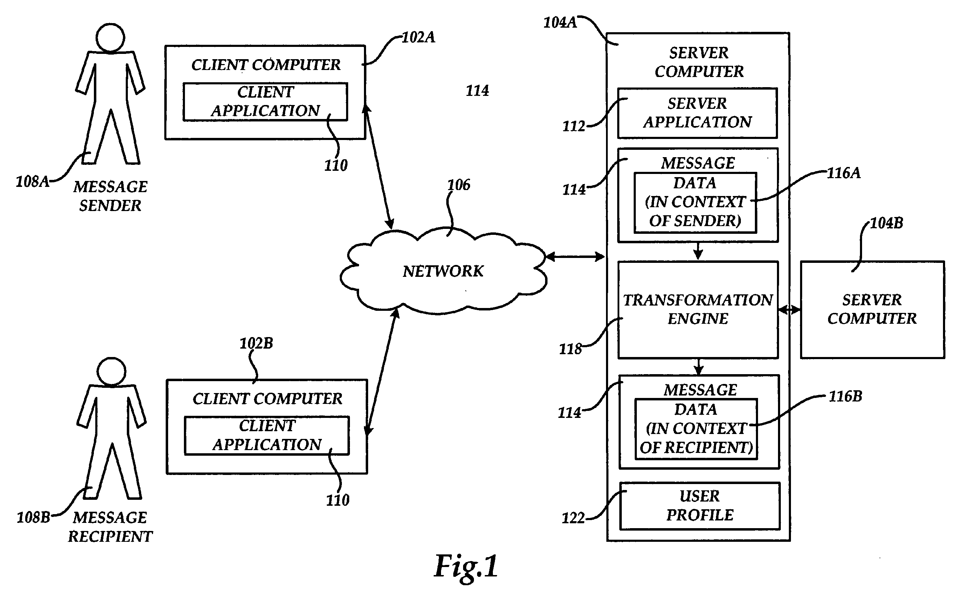

Turning now to FIGURE 1, details will be provided regarding an illustrative operating environment and several software components provided by the embodiments presented herein. In particular, FIGURE 1 shows aspects of a system for dynamically transforming data from the context of a message sender to the context of an intended recipient of the message. As shown in FIGURE 1, one system provided herein includes several client computers 102A-102B that are configured to connect to a server computer 104A through a network 106. In one embodiment, the client computers 102A-102B are standard desktop, laptop, or mobile computing devices capable of executing a client application 110. It should be appreciated that while the client computers 102A-102B are described in embodiments presented herein as a standard desktop computer, many other types of computing systems, such as mobile telephones, smart phones, set top boxes, and other types of computing systems may be utilized to embody the technologies presented herein

In one embodiment presented herein, the client application 110 comprises a Web browser application. As known in those skilled in the art, a Web browser application is an application program configured to transmit requests for Web pages and other associated content to other computers accessible via a local or wide area network. Web browser applications are also configured to receive responses to these requests and to render the received Web pages and related files for viewing by a user, such as the users 108A-108B.

In another embodiment presented herein, the client application 110 comprises an instant messaging client application. As known in the art, an instant messaging client allows a user to exchange messages in near real time with another user of the instant messaging client. It should be appreciated that while the embodiments presented herein describe the client application 110 as being either a Web browser application or an instant messaging client, the client application 110 may comprise other types of applications. For instance, the client application 110 may comprise a program for sending SMS messages or for sending messages via a micro-blogging service. In general, the client application 110 may comprise any type of application that provides functionality for sending messages to others.

In one embodiment presented herein, the server computer 104A illustrated in FIGURE 1 comprises a standard server computer configured to execute a server application 112 and the server application 112 comprises a program configured to provide a Web-based electronic mail ("e-mail") service. Through a Web-based user interface provided by the application 112, the users 108A-108B can send and receive electronic mail messages using a Web browser application executing on the client computers 102A-102B, respectively. It should be appreciated, however, that while one embodiment presented herein is described in the context of a Web-based e-mail service, the embodiments presented herein might be utilized with any type of server application 112 configured to allow users to send and receive messages. It should also be appreciated that the server application 112 illustrated in FIGURE 1 and described herein may include many more functions than those described herein.

In another embodiment, the server application 112 comprises an instant messaging server application. An instant messaging server application is a server application configured to assist instant messaging client applications with establishing connections to other instant messaging clients. In some instant messaging implementations, the instant messaging server application may also relay instant messages between instant messaging clients. It should be appreciated that while the server application 112 is described in embodiments herein as being either a server application for providing Web-based e-mail or an instant messaging server application, the server application 112 may comprise any type of server application that provides functionality for sending and/or receiving messages.

It should be appreciated that while only two client computers 102A-102B and a single server computer 104A have been illustrated in FIGURE 1, any number of these computing systems may be utilized. Moreover, it should be appreciated that although a single network 106 has been illustrated in FIGURE 1, many more network connections may be utilized to enable data communication between the client computers 102A-102B and the server computer 104A. In this regard, it should be appreciated that the simplified network architecture illustrated in FIGURE 1 is merely illustrative and that more or fewer software and hardware components than illustrated in FIGURE 1 may be utilized to implement the embodiments presented herein.

According to embodiments, a user 108A of the client computer 102A may utilize the client application 110 to communicate with the server application 112. In particular, through the functionality provided by the server application 112, the user 108A can create a message 114 for transmission to another user, such as the user 108B. It should be appreciated that the message 114 may comprise an email message, an instant message, an SMS message, a message sent through a micro-blogging service, or virtually any other type of electronic message.

During creation of the message 114, the user 108A may insert data 116A into the message 114 that is expressed in the context of the user 108A (the user 108A may be referred to herein as the "message sender"). The data 116A comprises any type of data that is expressed with reference to the context of the message sender 108A. For example, the message sender 108A may insert data 116A into the message 114 that is expressed with reference to their own geographic location, age, gender, personal preferences, network bandwidth, computing capabilities, or other contextual information.

In one embodiment, the server application 112 is configured to determine that the message 114 includes data 116A that has been expressed in the context of the message sender 108A. In response thereto, the server application 112 is further configured to ask the message sender 108A if they would like to have the data 116A dynamically transformed to the context of the user 108B (the user 108B is referred to herein as the "message recipient"). If the message sender 108A elects to have the data 116A transformed to the context to the message recipient 108B, the server application 112 utilizes the transformation engine 118 to perform the transformation.

According to embodiments, the transformation engine 118 is a software component configured to transform the data 116A expressed in the context of the message sender 108A to data 116B expressed in the context of the message recipient 108B. In order to transform the data 116A expressed in the context of the message sender 108A to the data 116B expressed in the context of the message recipient 108B, the transformation engine 118 determines the context of the message recipient 108B.

In order to determine the context of the message recipient 108B, the transformation engine 118 may utilize data stored in a user profile 122 or service account associated with the message recipient 108B. According to embodiments, the user profile or service account may include information, such as the geographic location, language, culture, market, age, gender, network bandwidth, computational capabilities, and other information regarding the message recipient 108B and his or her associated client computer 102B.

According to other embodiments, the transformation engine 118 may receive data from the client computer 102B that describes the current context of the message recipient 108B. For instance, in one embodiment the client computer 102B is configured with hardware or software components capable of determining the current geographic location of the client computer 102B. The transformation engine 118 may receive this data from the client computer 102B and utilize it in the transformation of the data 116A to the context of the message recipient 108B. Similarly, other data received from the client computer 102B may describe the current context of the message recipient 108B. For instance, the computational capabilities of the client computer 102B, and the bandwidth available through its connection to the network 106 may be provided to the transformation engine 118 and utilized in the transformation of the data 116A.

According to other implementations, the transformation engine 118 may communicate with a server computer 104B. According to embodiments, the server computer 104B provides data that is utilized by the transformation engine 118 in order to transform the data 116A to the context of the intended recipient 108B. For instance, in one implementation, the server computer 104B provides directions that may be utilized by the users 108A and 108B to navigate to a particular location. According to other embodiments, the server computer 104B may provide functionality for converting currency, converting graphical images or video, or providing other data in the context of one of the user 108B.

Once the transformation engine 118 has transformed the data 116A to the context of the message recipient 108B, the transformed data 116B is placed in the message 114. The server application 112 then transmits the message 114, including the data 116B expressed in the context of the intended recipient, to the client computer 102B. In the context of a server application 112 that provides Web-based electronic mail, the user 108B may utilize the client application 110 to log into the server application 112 to retrieve the message 114. In the context of a server application 112 that provides instant messaging services, the message 114 may be transmitted to an instant messaging client executing on the client computer 102B.

Still referring to FIGURE 1, the operation of the transformation engine 118 with respect to several illustrative examples of data 116 expressed in the context of a message sender 108A will be described. For instance, in one implementation, the data 116A inserted into the message 114 by the message sender 108A comprises directions to a destination that have been defined with reference to the geographical location of the message sender 108A. In this example, the transformation engine 118 is configured to transform the directions so that they are expressed from the perspective of the geographic location of the message recipient 108B. In order to perform this functionality, the user profile 122, a service account, or the client computer 102B may be consulted for the current geographic location of the message recipient 108B.

Once the geographic location of the message recipient 108B has been determined, the server computer 104B may be consulted for appropriate directions to the intended destination from the current geographic location of the message recipient 108B. The data 116B now expressed in the context of the message recipient 108B may then be inserted into the message 114 for transmission to the message recipient 108B. In this manner, the message recipient 108B is freed from the time consuming task of reformatting directions expressed from the perspective of the geographic location of the message sender 108A.

In another illustrative example, the message 114 includes data 116A describing an amount of currency with reference to a unit of currency that is utilized in the current geographic location of the message sender 108A. For instance, if the message sender 108A is located in the United States, the data 116A may be expressed utilizing U.S. dollars. In order to transform the data 116A in this illustrative example, the transformation engine 118 may determine the geographic location of the message recipient 108B. As discussed above, data contained in the user profile 122 or data received from the client computer 102B may indicate the geographic location of the message recipient 108B. If the message recipient 108B is located in a country that uses a different currency than that utilized to express the data 116A, the transformation engine 118 may utilize data retrieved from the server computer 104B to identify the appropriate currency and an exchange rate for converting between the currencies. The data 116B is then inserted into the message 114 that includes currency expressed in an appropriate currency unit for the current geographic location of the message recipient 108B.

According to yet another example, the message 114 may include data 116 that includes images or video that are formatted for a high bandwidth connection to the network 106. In this example, the transformation engine 118 may transform the images so that they are more appropriate in size for transmission to the client computer 102B, which might have a slower network connection to the network 106. In this example, the transformation engine 118 may reduce the resolution of the images or perform a greater a level of compression on the images to make them more appropriate for transmission to the client computer 102B. In this regard, information regarding the capacity of the network connection between the client computer 102B and the network 106 may be retrieved from the user profile 122 or from the client computer 102B. In this manner, images transmitted by the message sender 108A to the message recipient 108B may be configured appropriately for the network bandwidth available to the client computer 102B. In a similar fashion, images, video, or other data may be transformed by the transformation engine 118 based upon the identified computing capabilities of the client computer 102B.

According to another example, the message sender 108A may compose a message 114 including data 116 that includes movie recommendations made with respect to the preferences of the message sender 108A. In this example, the transformation engine 118 is configured to retrieve data from the server computer 104B to transform the movie recommendations based upon the preferences of the message recipient 108B. Once the movie recommendations have been transformed, the message 114 is transmitted to the message recipient 108B including the data 116B contained therein that includes the movie recommendations expressed from the perspective of the context of the message recipient 108B.

It should be appreciated that the examples described above are merely illustrative, and that any type of data that has been expressed from the context of a message sender can be transformed by the transformation engine 118 into the context of a message recipient 108B. It should also be appreciated that while several illustrative examples have been provided regarding the types of data that may be utilized to identify the context of the message sender 108A and the message recipient 108B, virtually any type of data specific to the message sender 108B or the message recipient 108B may be utilized.

It should further be appreciated that while the embodiment shown in FIGURE 1 utilizes a transformation engine 118 executing on the server computer 104A, the data transformations presented herein may be performed without the use of a separate transformation engine. In one embodiment, for instance, the transformations may be performed directly by the server application 112. In another embodiment, the transformations described herein are performed directly by the client application 110 executing at the client computer 102A. In another embodiment, the transformations described herein are performed directly by the client application 110 executing on the client computer 102B. In other embodiments, transformations may be performed through a combination of operations performed at the client computer 102A, the server computer 104A, and the client computer 102B. Moreover, it should be appreciated that although the illustrative transformations described herein are complex transformations involving data retrieved from the server computer 104B, other simpler transformations may be performed that do not require data to be obtained from another data source.

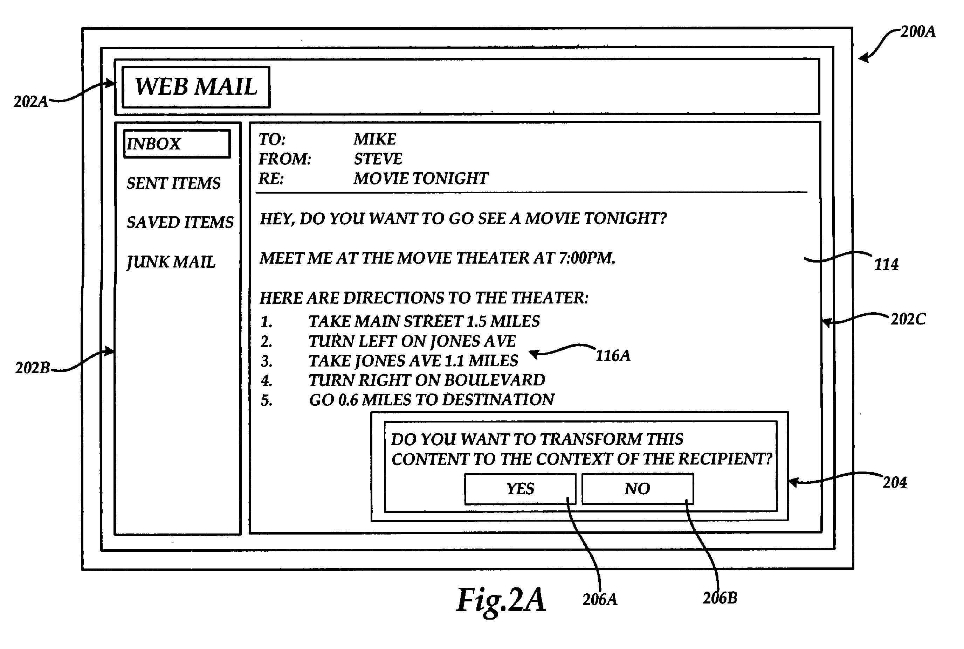

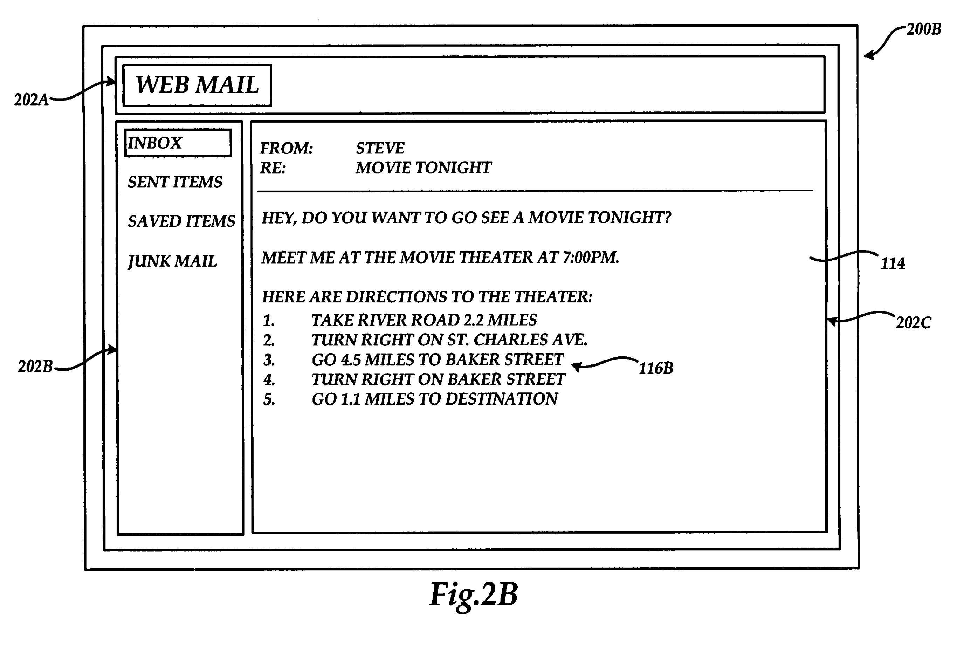

Referring now to FIGURE 2A, an illustrative user interface 200A will be described that shows one user interface provided by the server application 112. In particular, FIGURE 2 shows an illustrative user interface 200A provided by the server application 112 in an embodiment wherein the server application 112 is configured to provide facilities for sending and receiving electronic mail messages through a Web-based user interface. The user interface 200A is rendered and displayed by a Web browser application executing on one of the client computers 102A-102B based upon data received from the server application 112.

In one implementation, the user interface 200A includes a first user interface pane 202A that identifies the server application 112. Another user interface pane 202B may be provided through which a user 108A-108B can select various folders containing electronic mail items. A user interface pane 202C is also provided in this embodiment that includes functionality for allowing a user to create an electronic mail message 114 for transmission to another user. In this embodiment, the user 108A utilizes the client application 110 executing on the client computer 102A to create a message 114 for transmission to the user 108B, who is utilizing the client application 110 executing on the client computer 102B. It should be appreciated, however, that although the examples presented herein are described in the context of a single message recipient, the embodiments presented herein may be utilized in a similar fashion with respect to multiple message recipients. When multiple recipients are identified, each message sent to an individual recipient may be customized based upon that recipient's particular context.

In the example shown in FIGURE 2A, the user 108A has created a message 114 inviting the user 108B to attend a movie. As part of the message 114, the user 108A has inserted data 116A into the message 114. In particular, in the example shown in FIGURE 2A, the data 116A comprises directions to a movie theater expressed in the context of the message sender 108A. In particular, the data 116A has been expressed from the current geographic location of the message sender 108A.

In response to the insertion of the data 116A expressed in the context of the message sender 108A, the server application 112 has generated a user input dialog box 204. The user input dialog box 204 asks the user 108A if they would like to dynamically transform the data 116A to the context of the message recipient 108B. If the user 108A selects the user interface control 206A, the transformation engine 118A will transform the data 116A to the context of the message recipient 108B in the manner described below. If the user 108A selects the user interface control 206B, no transformation of the data 116A will be performed.

It should be appreciated that while the embodiment illustrated in FIGURE 2A displays a user interface to the user 108A asking if they would like to transform the data 116A to the context of the message recipient 108B, it is not necessary to provide such a user interface. In an embodiment where no user interface is provided, the data 116A may be transformed automatically to the context of the message recipient 108B. In another embodiment, the user input dialog box 204 may be displayed to the message recipient 108B. In this case, the recipient 108B could indicate whether or not they wanted the data 116A to be transformed to their context.

FIGURE 2B shows an illustrative interface 200B provided to the message recipient 108B upon receipt of the message 114 that includes the data 116B that has been transformed to the context of the message recipient 108B. As illustrated in FIGURE 2A, the user interface 200B displayed by the client computer 102B includes the user interface panes 202A-202C. In this example, however, the user interface pane 202C is utilized to display a message 114 that has been received from the user 108A. In this example, the data 116B contained in the message 114 has been transformed by the transformation engine 118 to the context of the message recipient 108B.

As discussed above, in order to perform the transformation, the transformation engine 118 may determine a geographic location of the message recipient 108B based upon the contents of a user profile 122, upon data received from the client computer 102B, or upon data received from another source. The transformation engine 118 may also utilize data retrieved from the server computer 104B to perform the transformation of the data 116A to the context of the message recipient 108B. As discussed above, transforming the data 116A to the context of the message recipient 108B frees the recipient 108B from the time consuming process of reconfiguring the directions based upon their own geographic location. It should be appreciated that the user interfaces illustrated and described in FIGURES 2A-2B are merely illustrative and that other types of user interfaces may be provided.

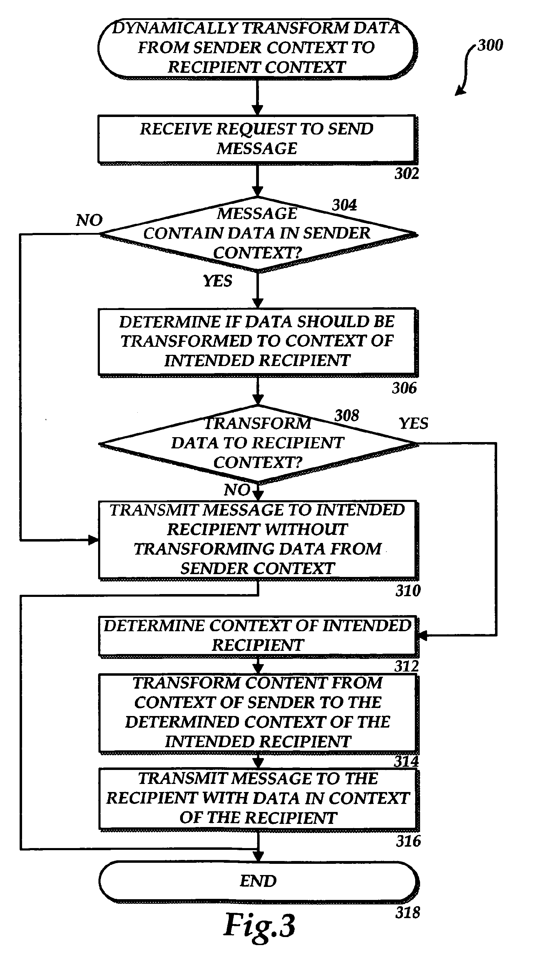

Referring now to FIGURE 3, additional details will be provided regarding the embodiments presented herein for dynamically transforming data from the context of a sender to the context of an intended recipient. In particular, FIGURE 3 shows a routine 300 that illustrates aspects of the operation of the client application 110 and the server application 112 in one embodiment presented herein.

It should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states operations, structural devices, acts, or modules. These operations, structural devices, acts and modules may be implemented in software, in firmware, in special purpose digital logic, and any combination thereof. It should also be appreciated that more or fewer operations may be performed than shown in the figures and described herein. These operations may also be performed in a different order than those described herein.

The routine 300 begins at operation 302, where the server application 112 receives a request to send a message 114. From operation 302, the routine 300 proceeds to operation 304, where the server application 112 determines whether the message 114 includes data 116A that has been expressed in the context of the message sender 108A. If the message 114 does not have data 116A expressed in context of a message sender 108A, the routine 300 proceeds from operation 304 to operation 310, described below. If, however, the message 114 does contain data 116A in the context of the message sender 108A, the routine 300 proceeds from operation 304 to operation 306.

At operation 306, the server application 112 determines whether the data 116A should be transformed to the context of the intended recipient 108B. For instance, as described above with reference to FIGURE 2A, a user interface dialog box 204 may be presented to the user 108A asking if they would like to transform the data to the perspective of the message recipient 108B. If the data 116A is to be transformed to the context of the message recipient 108B, the routine 300 proceeds from operation 308 to operation 312, described below. If the data 116A is not to be transformed to the context of the message recipient 108B, the routine 300 proceeds from operation 308 to operation 310. At operation 310, the message 114 is transmitted to the message recipient 108B without transforming the data 116A. From operation 310, the routine 300 operation 318, where it ends.

If the data 116A is to be transformed to the context of the message recipient 108B, the transformation engine 118 determines the context of the intended recipient at operation 312. As discussed above, data stored in a user profile 122, received from the client computer 102B or obtained in another manner may be utilized to determine the context of the message recipient 108B. For instance, data stored in the user profile 122 may identify a geographic location of the recipient 108B, the capabilities of the client computer 102B, or the network bandwidth available to the client computer 102B. Other data contained in the user profile 122 may describe the context of the message recipient 108B. Once the context of the message recipient 108B has been determined, the routine 300 proceeds from operation 312 to operation 314.

At operation 314, the transformation engine 118 transforms the data 116A that has been expressed in the context of the message sender 108A to the determined context of the intended message recipient 108B. As discussed above, data may be retrieved from a server computer 104B and utilized in the transformation process. Once the data 116A has been transformed into the data 116B expressed in the context of the message recipient 108B, the routine 300 proceeds to operation 316. At operation 316, the server application 112 transmits the message 114 with the data 116B expressed in the context of the message recipient 108B to the client computer 102B. From operation 316, the routine 300 proceeds to operation 318, where it ends.

It should be appreciated that, according to embodiments, the transformation of the data 116A is performed at the time the message 114 is sent by the message sender 108A. According to other embodiments, the transformation of the data 116A is performed at the time the message 114 is received by the message recipient 108B. According to another embodiment, the transformation is performed between the time that the message 114 is sent by the message sender 108A and the time the message 114 is received by the message recipient 108B.

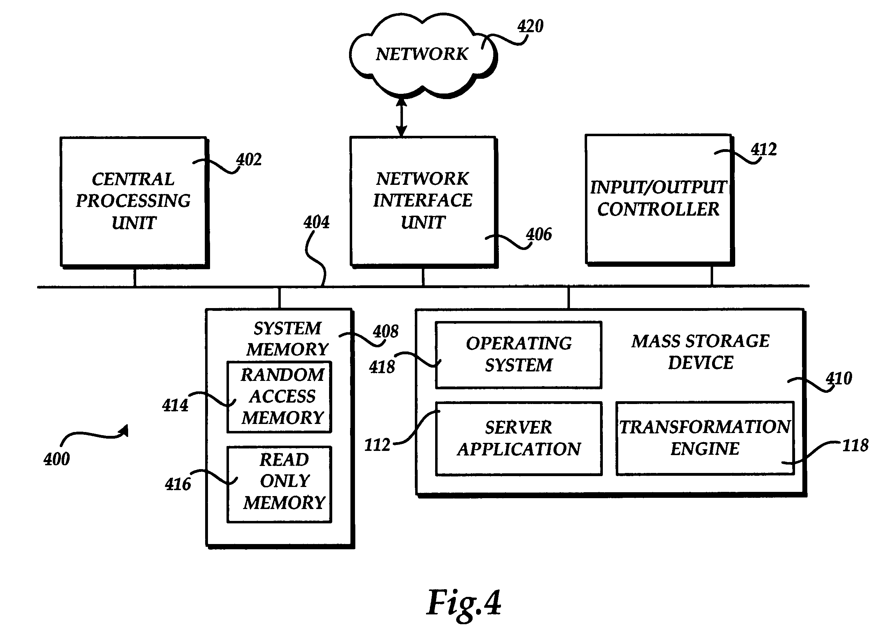

FIGURE 4 shows an illustrative computer architecture for a computer 400 capable of executing one or more of the software components described herein for transforming content from the context of a sender to the context of a recipient in the manner presented above. The computer architecture shown in FIGURE 4 illustrates a conventional desktop, laptop, or server computer and may be utilized to execute any aspects of the software components presented herein described as executing on the client computers 102A-102B or the server computers 104A-104B.

The computer architecture shown in FIGURE 4 includes a central processing unit 402 ("CPU"), a system memory 408, including a random access memory 414 ("RAM") and a read-only memory ("ROM") 416, and a system bus 404 that couples the memory to the CPU 402. A basic input/output system containing the basic routines that help to transfer information between elements within the computer 400, such as during startup, is stored in the ROM 416. The computer 400 further includes a mass storage device 410 for storing an operating system 418, data, application programs, and other program modules, which are described in greater detail herein.

The mass storage device 410 is connected to the CPU 402 through a mass storage controller (not shown) connected to the bus 404. The mass storage device 410 and its associated computer-readable media provide non-volatile storage for the computer 400. Although the description of computer-readable media contained herein refers to a mass storage device, such as a hard disk or CD-ROM drive, it should be appreciated by those skilled in the art that computer-readable media can be any available computer storage media that can be accessed by the computer 400.

By way of example, and not limitation, computer-readable media may include volatile and non-volatile, removable and non-removable media implemented in any method or technology for storage of information such as computer-readable instructions, data structures, program modules or other data. For example, computer-readable media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer 400.

According to various embodiments, the computer 400 may operate in a networked environment using logical connections to remote computers through a network such as the network 420. The computer 400 may connect to the network 420 through a network interface unit 406 connected to the bus 404. It should be appreciated that the network interface unit 406 may also be utilized to connect to other types of networks and remote computer systems. The computer 400 may also include an input/output controller 412 for receiving and processing input from a number of other devices, including a keyboard, mouse, or electronic stylus (not shown in FIGURE 4). Similarly, an input/output controller may provide output to a display screen, a printer, or other type of output device (also not shown in FIGURE 4).

As mentioned briefly above, a number of program modules and data files may be stored in the mass storage device 410 and RAM 414 of the computer 400, including an operating system 418 suitable for controlling the operation of a networked desktop, laptop, or server computer. The mass storage device 410 and RAM 414 may also store one or more program modules. In particular, the mass storage device 410 and the RAM 414 may store the server application 112 and the transformation engine 118, each of which was described in detail above with respect to FIGURES 1-3. The mass storage device 410 and the RAM 414 may also store other types of program modules and data.

Based on the foregoing, it should be appreciated that technologies for transforming data from the context of a message sender to the context of a message recipient are provided herein. It should also be appreciated that while the embodiments presented herein are described with respect to certain types of electronic messages, the concepts and technologies presented herein may be utilized to transform any type of electronic communication. Electronic communications may include, but are not limited to, electronically-transmitted or stored messages, documents, data files, and other information.

Although the subject matter presented herein has been described in language specific to computer structural features, methodological acts, and computer readable media, it is to be understood that the invention defined in the appended claims is not necessarily limited to the specific features, acts, or media described herein. Rather, the specific features, acts and mediums are disclosed as example forms of implementing the claims.

The subject matter described above is provided by way of illustration only and should not be construed as limiting. Various modifications and changes may be made to the subject matter described herein without following the example embodiments and applications illustrated and described, and without departing from the scope of the present invention, which is set forth in the following claims.

## Claims

1. A method for dynamically transforming data from a context of a sender to a context of an intended recipient, the method comprising:
receiving a request to transmit an electronic communication to an intended recipient,
determining whether the electronic communication (114) includes data (116A) that has been expressed in the context of the message sender (108A);
if the electronic communication (114) contains data (116A) in the context of the message sender (108A), determining whether the data (116A) should be transformed to the context of the intended recipient 108B, including:
presenting a user interface dialog box (204) to the user (108A) asking if he would like to transform the data (116A) to the perspective of the message recipient (108B)
receiving (308) a request to transform the data (116A) expressed in the context of the sender to data (116B) expressed in a context of the intended recipient; and
in response to receiving the request to transform the data (116A) expressed in the context of the sender to data (116B) expressed in the context of the intended recipient,
determining (312) the context of the intended recipient comprising retrieving data from a user profile (122) associated with the intended recipient to determine the context of the intended recipient,
transforming (314) the data (116A) expressed in the context of the sender to the determined context of the intended recipient, and
attempting to deliver (316) the electronic communication including the data (116A) expressed in the context of the intended recipient to the intended recipient.

2. The method of claim 1, wherein determining the context of the intended recipient comprises determining a geographic location of the intended recipient.

3. The method of claim 1, wherein determining the context of the intended recipient comprises determining an available network bandwidth for communicating with a computing device associated with the intended recipient.

4. The method of claim 1, wherein determining the context of the intended recipient comprises determining one or more capabilities of a computing device associated with the intended recipient.

5. The method of claim 1, wherein transforming the data (116A) expressed in the context of the sender to the determined context of the intended recipient comprises transforming the data (116A) expressed in the context of the sender to the determined context of the intended recipient at a time the electronic communication is sent by the sender.

6. The method of claim 1, wherein transforming the data (116A) expressed in the context of the sender to the determined context of the intended recipient comprises transforming the data (116A) expressed in the context of the sender to the determined context of the intended recipient at a time the electronic communication is received by the intended recipient.

7. The method of claim 1, wherein transforming the data (116A) expressed in the context of the sender to the determined context of the intended recipient comprises transforming the data (116A) expressed in the context of the sender to the determined context of the intended recipient between a time the electronic communication is sent by the sender and a time the electronic communication is received by the intended recipient.

8. The method of claim 1, wherein the electronic communication comprises an electronic mail message.

9. The method of claim 1, wherein the electronic communication comprises an instant message.

10. A computer storage medium having computer executable instructions stored thereon which, when executed by a computer, cause the computer to:
receive (302) a request to transmit a message, the message having data (116A) contained therein that is expressed in a context of a sender of the message;
in response to receiving the request to transmit the message, to determine (306) whether the data (116A) contained in the message should be transformed to a context of an intended recipient of the message comprising presenting a user interface dialog box (204) to the user (108A) asking if he would like to transform the data (116A) to the perspective of the message recipient ( 108B); and
in response to determining that the message should be transformed to a context of the intended recipient, to determine (312) the context of the intended recipient of the message comprising retrieving data from a user profile (122) associated with the intended recipient to determine the context of the intended recipient, to transform (314) the data (116A) contained in the message to the determined context of the intended recipient, and to transmit (316) the message containing the data (116B) expressed in the context of the intended recipient to the intended recipient.

11. The computer storage medium of claim 10, wherein determining (312) the context of the intended recipient comprises determining a geographic location of the intended recipient.

12. The computer storage medium of claim 10, wherein determining (312) the context of the intended recipient comprises determining an available network bandwidth for communicating with a computing device associated with the intended recipient.

13. The computer storage medium of claim 10, wherein determining (312) the context of the intended recipient comprises determining one or more capabilities of a computing device associated with the intended recipient.

14. The computer storage medium of claim 10, wherein the message comprises an electronic mail message.

15. The computer storage medium of claim 10, wherein the message comprises an instant message.

16. A method (300) for dynamically transforming data from a context of a sender to a context of an intended recipient, the method comprising:
receiving (302) a request at a server computer to transmit a message from a sender to an intended recipient of the message;
receiving a request to insert data (116A) into the message that is expressed in a context of the sender of the message;
in response to receiving the request to insert the data (116A) that is expressed in the context of the sender, querying (308) the sender of the message to determine whether the data (116A) expressed in the context of the sender should be transformed to a context of the intended recipient of the message, including presenting a user interface dialog box (204) to the user (108A) asking if he would like to transform the data (116A) to the perspective of the message recipient (108B);
in response to determining that the data (116A) expressed in the context of the sender of the message should be transformed to the context of the intended recipient of the message, determining (312) the context of the intended recipient based upon one or
more of a geographic location of the intended recipient, an available bandwidth or processing capabilities of a computing device associated with the intended recipient, or a user profile (122) associated with the intended recipient;
transforming (314) the data (116A) from the context of the sender to the determined context of the intended recipient; and
transmitting (316) the message to the intended recipient, the message including the data (116A) that has been transformed from the context of the sender to the context of the intended recipient.

17. The method of claim 16, wherein the message comprises one of an electronic mail message or an instant message.

18. The method of claim 17, wherein the data (116A) is transformed from the context of the sender to the context of the intended recipient at one of a time the message is sent by the sender, a time the message is received by the intended recipient, or a time between the time the message is sent by the sender and the time the message is received by the intended recipient.

## Patentansprüche

1. Verfahren zum dynamischen Transformieren von Daten aus einem Kontext eines Senders in einen Kontext eines bestimmungsgemäßen Empfängers, wobei das Verfahren aufweist:
Empfangen einer Anforderung eine elektronische Kommunikation zu einem bestimmungsgemäßen Empfänger zu senden;
Bestimmen, ob die elektronische Kommunikation (114) Daten (116A) aufweist, die im Kontext des Nachrichtensenders (108A) ausgedrückt wurden;
falls die elektronische Kommunikation (114) Daten (116A) im Kontext des Nachrichtensenders (108A) aufweist, bestimmen, ob die Daten (116A) in den Kontext des bestimmungsgemäßen Empfängers (108B) transformiert werden sollen, aufweisend:
Präsentieren einer Nutzerschnittstellendialogbox (204) an den Nutzer (108A),
welche fragt, ob er die Daten (116A) in die Perspektive des Nachrichtenempfängers (108B) transformieren möchte,
Empfangen (308) einer Anforderung, die im Kontext des Senders ausgedrückten Daten (116A) in Daten (116B) zu transformieren, die in einem Kontext des bestimmungsgemäßen Empfängers ausgedrückt sind; und
in Reaktion auf ein Empfangen der Anforderung, die im Kontext des Senders ausgedrückten Daten (116A) in Daten (116B) zu transformieren, die im Kontext des bestimmungsgemäßen Empfängers ausgedrückt sind, bestimmen (312) des Kontextes des bestimmungsgemäßen Empfängers, welches ein Abrufen von Daten aus einem Nutzerprofil (122) aufweist, das mit dem bestimmungsgemäßen Empfänger assoziiert ist, um den Kontext des bestimmungsgemäßen Empfängers zu bestimmen;
Transformieren (314) der Daten (116A), die im Kontext des Senders ausgedrückt sind, in den bestimmten Kontext des bestimmungsgemäßen Empfängers; und
Versuchen, die elektronische Kommunikation einschließlich der Daten (116A), die im Kontext des bestimmungsgemäßen Empfängers ausgedrückt sind, an den bestimmungsgemäßen Empfänger zu liefern (316).

2. Verfahren nach Anspruch 1, wobei ein Bestimmen des Kontextes des bestimmungsgemäßen Empfängers ein Bestimmen eines geographischen Ortes des bestimmungsgemäßen Empfängers aufweist.

3. Verfahren nach Anspruch 1, wobei ein Bestimmen des Kontextes des bestimmungsgemäßen Empfängers ein Bestimmen einer verfügbaren Netzbandbreite für ein Kommunizieren mit einer Rechenvorrichtung aufweist, die mit dem bestimmungsgemäßen Empfänger assoziiert ist.

4. Verfahren nach Anspruch 1, wobei ein Bestimmen des Kontextes des bestimmungsgemäßen Empfängers ein Bestimmen einer oder mehrerer Fähigkeiten einer Rechenvorrichtung aufweist, die mit dem bestimmungsgemäßen Empfänger assoziiert ist.

5. Verfahren nach Anspruch 1, wobei ein Transformieren der Daten (116A), die im Kontext des Senders ausgedrückt sind, in den bestimmten Kontext des bestimmungsgemäßen Empfängers ein Transformieren der Daten (116A), die im Kontext des Senders ausgedrückt sind, in den bestimmten Kontext des bestimmungsgemäßen Empfängers zu einer Zeit aufweist, zu der die elektronische Kommunikation durch den Sender gesendet wird.

6. Verfahren nach Anspruch 1, wobei ein Transformieren der Daten (116A), die in dem Kontext des Senders ausgedrückt sind, in den bestimmten Kontext des bestimmungsgemäßen Empfängers, ein Transformieren der Daten (116A), die im Kontext des Senders ausgedrückt sind, in den bestimmten Kontext des bestimmungsgemäßen Senders zu einem Zeitpunkt aufweist, zu dem die elektronische Kommunikation durch den bestimmungsgemäßen Empfänger empfangen wird.

7. Verfahren nach Anspruch 1, wobei ein Transformieren der Daten (116A), die im Kontext des Senders ausgedrückt sind, in den bestimmten Kontext des bestimmungsgemäßen Empfängers ein Transformieren der Daten (116A), die im Kontext des Senders ausgedrückt sind, in den bestimmten Kontext des bestimmungsgemäßen Empfängers zwischen einer Zeit, zu der die elektronische Kommunikation durch den Sender gesendet wird, und einen Zeitpunkt, zu dem die elektronische Kommunikation durch den bestimmungsgemäßen Empfänger empfangen wird, aufweist.

8. Verfahren nach Anspruch 1, wobei die elektronische Kommunikation eine elektronische Postnachricht aufweist.

9. Verfahren nach Anspruch 1, wobei die elektronische Kommunikation eine Sofortnachricht aufweist.

10. Computerspeichermedium mit darauf gespeicherten Computer-ausführbaren Befehlen, die, wenn sie von einem Computer ausgeführt werden, den Computer dazu veranlassen:
Eine Anforderung zu empfangen (302), eine Nachricht zu senden, wobei die Nachricht darin enthaltene Daten (116A) aufweist, die in einem Kontext eines Senders der Nachricht ausgedrückt sind;
In Reaktion auf ein Empfangen der Anforderung zum Senden der Nachricht, zu bestimmen (306), ob die Daten (116A), die in der Nachricht enthalten sind, in einen Kontext eines bestimmungsgemäßen Empfängers der Nachricht transformiert werden sollen,
aufweisend ein Präsentieren einer Nutzerschnittstellen-Dialogbox (204) an den Nutzer (108A), die frägt, ob er die Daten (116A) in die Perspektive des Nachrichtenempfängers (108B) transformieren möchte ;
und in Reaktion auf ein Bestimmen, dass die Nachricht in einen Kontext des bestimmungsgemäßen Empfängers transformiert werden soll, den Kontext des bestimmungsgemäßen Empfängers der Nachricht zu bestimmen (312), aufweisend ein Abrufen von Daten von einem Nutzerprofil (122), das mit den bestimmungsgemäßen Empfänger assoziiert ist, um den Kontext des bestimmungsgemäßen Empfängers zu bestimmen, die Daten (116A), die in der Nachricht enthalten sind, in den bestimmten Kontext des bestimmungsgemäßen Empfängers zu transformieren (314) und die Nachricht, welche die Daten (116B) aufweist, die im Kontext des bestimmungsgemäßen Empfängers ausgedrückt sind, an den bestimmungsgemäßen Empfänger zu senden (316).

11. Computerspeichermedium nach Anspruch 10, wobei ein Bestimmen (312) des Kontextes des bestimmungsgemäßen Empfängers ein Bestimmen eines geographischen Ortes des bestimmungsgemäßen Empfängers aufweist.

12. Computerspeichermedium nach Anspruch 10, wobei ein Bestimmen (312) des Kontextes des bestimmungsgemäßen Empfängers ein Bestimmen einer verfügbaren Netzbandbreite für ein Kommunizieren mit einer Rechenvorrichtung, die mit dem bestimmungsgemäßen Empfänger assoziiert ist, aufweist.

13. Computerspeichermedium nach Anspruch 10, wobei ein Bestimmen (312) des Kontextes des bestimmungsgemäßen Empfängers ein Bestimmen einer oder mehrerer Fähigkeiten einer Rechenvorrichtung aufweist, die mit dem bestimmungsgemäßen Empfänger assoziiert ist.

14. Computerspeichermedium nach Anspruch 10, wobei die Nachricht eine elektronische Postnachricht aufweist.

15. Computerspeichermedium nach Anspruch 10, wobei die Nachricht eine Sofortnachricht aufweist.

16. Verfahren (300) zum dynamischen Transformieren von Daten aus einem Kontext eines Senders in einen Kontext eines bestimmungsgemäßen Empfängers, wobei das Verfahren aufweist:
Empfangen (302) einer Anforderung an einem Servercomputer, eine Nachricht von einem Sender an einen bestimmungsgemäßen Empfänger der Nachricht zu senden;
Empfangen einer Anforderung, Daten (116A) in die Nachricht hinzufügen, die in einem Kontext des Senders der Nachricht ausgedrückt sind;
In Reaktion auf ein Empfangen der Anforderung, die Daten (116A), die im Kontext des Senders ausgedrückt sind, einzufügen, Abfragen (308) des Senders der Nachricht, um zu bestimmen, ob die Daten (116A), die im Kontext des Senders ausgedrückt sind, in einen Kontext des bestimmungsgemäßen Empfängers der Nachricht transformiert werden sollen, aufweisend ein Präsentieren einer Nutzerschnittstellendialogbox (204) an den Nutzer (108A), die frägt, ob er die Daten (116A) in die Perspektive des Nachrichtenempfängers (108B) transformieren möchte;
In Reaktion auf ein Bestimmen, dass die Daten (116A), die im Kontext des Senders der Nachricht ausgedrückt sind, in den Kontext des bestimmungsgemäßen Empfängers der Nachricht transformiert werden sollen, Bestimmen (312) des Kontextes des bestimmungsgemäßen Empfängers basierend auf einem oder mehreren von einem geographischen Ort des bestimmungsgemäßen Empfängers, einer verfügbaren Bandbreite oder
Verarbeitungsfähigkeiten einer Rechenvorrichtung, die mit dem bestimmungsgemäßen Empfänger assoziiert ist, oder einem Nutzerprofil (122), das mit dem bestimmungsgemäßen Empfänger assoziiert ist;
Transformieren (314) der Daten (116A) vom Kontext des Senders in den bestimmten Kontext des bestimmungsgemäßen Empfängers; und
Übertragen (316) der Nachricht an den bestimmungsgemäßen Empfänger, wobei die Nachricht die Daten (116A) aufweist, die aus dem Kontext des Senders in den Kontext des bestimmungsgemäßen Empfängers transformiert wurden.

17. Verfahren nach Anspruch 16, wobei die Nachricht eines von einer elektronischen Postnachricht oder einer Sofortnachricht aufweist.

18. Verfahren nach Anspruch 17, wobei die Daten (116A) aus dem Kontext des Senders in den Kontext des bestimmungsgemäßen Empfängers zu einer von einer Zeit, zu der die Nachricht durch den Sender gesendet wird, einer Zeit, zu der die Nachricht durch den bestimmungsgemäßen Empfänger empfangen wird, oder einer Zeit zwischen der Zeit, zu der die Nachricht durch den Sender gesendet wird und der Zeit, zu der die Nachricht durch den bestimmungsgemäßen Empfänger empfangen wird, transformiert werden.

## Revendications

1. Procédé pour transformer de manière dynamique des données depuis un contexte d'expéditeur vers un contexte d'un destinataire escompté, le procédé comprenant les étapes suivantes :
recevoir une demande pour transmettre une communication électronique à un destinataire escompté, déterminer si la communication électronique (114) comprend des données (116A) qui ont été exprimées dans le contexte de l'expéditeur du message (108A) ;
si la communication électronique (114) contient des données (116A) dans le contexte de l'expéditeur du message (108A), déterminer si les données (116A) devraient être transformées selon le contexte du destinataire escompté (108B), comprenant les étapes suivantes :
présenter une boîte de dialogue d'interface d'utilisateur (204) à l'utilisateur (108A) lui demandant s'il souhaiterait transformer les données (116A) en fonction du destinataire du message (108B),
recevoir (308) une demande de transformer les données (116A) exprimées dans le contexte de l'expéditeur en données (116B) exprimées dans un contexte du destinataire escompté ; et
en réponse à la réception de la demande de transformer les données (116A) exprimées dans le contexte de l'expéditeur en données (116B) exprimées dans le contexte du destinataire escompté, déterminer (312) le contexte du destinataire escompté comprenant de récupérer des données depuis un profil d'utilisateur (122) associé au destinataire escompté pour déterminer le contexte du destinataire escompté,
transformer (314) les données (116A) exprimées dans le contexte de l'expéditeur selon le contexte déterminé du destinataire escompté, et
tenter de délivrer (316) la communication électronique comprenant les données (116A) exprimées dans le contexte du destinataire escompté au destinataire escompté.

2. Procédé selon la revendication 1, dans lequel déterminer le contexte du destinataire escompté comprend de déterminer une position géographique du destinataire escompté.

3. Procédé selon la revendication 1, dans lequel déterminer le contexte du destinataire escompté comprend de déterminer une largeur de bande de réseau disponible pour communiquer avec un dispositif informatique associé au destinataire escompté.

4. Procédé selon la revendication 1, dans lequel déterminer le contexte du destinataire escompté comprend de déterminer une ou plusieurs capacités d'un dispositif informatique associé au destinataire escompté.

5. Procédé selon la revendication 1, dans lequel transformer les données (116A) exprimées dans le contexte de l'expéditeur selon le contexte déterminé du destinataire escompté comprend de transformer les données (116A) exprimées dans le contexte de l'expéditeur selon le contexte déterminé du destinataire escompté à un moment où la communication électronique est envoyée par l'expéditeur.

6. Procédé selon la revendication 1, dans lequel transformer les données (116A) exprimées dans le contexte de l'expéditeur selon le contexte déterminé du destinataire escompté comprend de transformer les données (116A) exprimées dans le contexte de l'expéditeur selon le contexte déterminé du destinataire escompté à un moment où la communication électronique est reçue par le destinataire escompté.

7. Procédé selon la revendication 1, dans lequel transformer les données (116A) exprimées dans le contexte de l'expéditeur selon le contexte déterminé du destinataire escompté comprend de transformer les données (116A) exprimées dans le contexte de l'expéditeur selon le contexte déterminé du destinataire escompté entre un moment où la communication électronique est envoyée par l'expéditeur et un moment où la communication électronique est reçue par le destinataire escompté.

8. Procédé selon la revendication 1, dans lequel la communication électronique comprend un message électronique.

9. Procédé selon la revendication 1, dans lequel la communication électronique comprend un message instantané.

10. Support de stockage informatique sur lequel sont stockées des instructions exécutables par ordinateur qui, lorsqu'elles sont exécutées par un ordinateur, amènent l'ordinateur à :
recevoir (302) une demande pour transmettre un message, le message contenant des données (116A) qui sont exprimées dans un contexte d'un expéditeur du message ;
en réponse à la réception de la demande de transmettre le message, déterminer (306) si les données (116A) contenues dans le message devraient être transformées selon un contexte d'un destinataire escompté du message comprenant de présenter une boîte de dialogue d'interface d'utilisateur (204) à l'utilisateur (108A) lui demandant s'il souhaiterait transformer les données (116A) en fonction du destinataire du message (108B) ; et
en réponse à la détermination de savoir si le message devrait être transformé selon un contexte du destinataire escompté, déterminer (312) le contexte du destinataire escompté du message comprenant de récupérer des données depuis un profil d'utilisateur (122) associé au destinataire escompté pour déterminer le contexte du destinataire escompté, pour transformer (314) les données (116A) contenues dans le message selon le contexte déterminé du destinataire escompté, et pour transmettre (316) le message contenant les données (116B) exprimées dans le contexte du destinataire escompté au destinataire escompté.

11. Support de stockage informatique selon la revendication 10, dans lequel déterminer (312) le contexte du destinataire escompté comprend de déterminer une position géographique du destinataire escompté.

12. Support de stockage informatique selon la revendication 10, dans lequel déterminer (312) le contexte du destinataire escompté comprend de déterminer une largeur de bande de réseau disponible pour communiquer avec un dispositif informatique associé au destinataire escompté.

13. Support de stockage informatique selon la revendication 10, dans lequel déterminer (312) le contexte du destinataire escompté comprend de déterminer une ou plusieurs capacités d'un dispositif informatique associé au destinataire escompté.

14. Support de stockage informatique selon la revendication 10, dans lequel le message comprend un message électronique.

15. Support de stockage informatique selon la revendication 10, dans lequel le message comprend un message instantané.

16. Procédé (300) pour transformer de manière dynamique des données depuis un contexte d'un expéditeur vers un contexte d'un destinataire escompté, le procédé comprenant les étapes suivantes :
recevoir (302) une demande au niveau d'un ordinateur serveur pour transmettre un message depuis un expéditeur vers un destinataire escompté du message ;
recevoir une demande d'insérer des données (116A) dans le message qui sont exprimées dans un contexte de l'expéditeur du message ;
en réponse à la réception de la demande d'insérer les données (116A) qui sont exprimées dans le contexte de l'expéditeur, interroger (308) l'expéditeur du message pour déterminer si les données (116A) exprimées dans le contexte de l'expéditeur devraient être transformées selon un contexte du destinataire escompté du message, comprenant de présenter une boîte de dialogue d'interface d'utilisateur (204) à l'utilisateur (108A) lui demandant s'il souhaiterait transformer les données (116A) en fonction du destinataire du message (108B) ;
en réponse à la détermination de savoir si les données (116A) exprimées dans le contexte de l'expéditeur du message devraient être transformées selon le contexte du destinataire escompté du message, déterminer (312) le contexte du destinataire escompté sur la base d'une ou plusieurs positions géographiques du destinataire escompté, d'une largeur de bande disponible ou des capacités de traitement d'un dispositif informatique associé au destinataire escompté, ou d'un profil d'utilisateur (122) associé au destinataire escompté ;
transformer (314) les données (116A) depuis le contexte de l'expéditeur au contexte déterminé au destinataire escompté ;
transmettre (316) le message au destinataire escompté, le message comprenant les données (116A) qui ont été transformées depuis le contexte de l'expéditeur selon le contexte du destinataire escompté.

17. Procédé selon la revendication 16, dans lequel le message comprend un parmi un message électronique ou un message instantané.

18. Procédé selon la revendication 17, dans lequel les données (116A) sont transformées depuis le contexte de l'expéditeur vers le contexte du destinataire escompté à un des moments parmi un moment où le message est envoyé par l'expéditeur, un moment où le message est reçu par le destinataire escompté, ou un moment entre le moment où le message est envoyé par l'expéditeur et le moment où le message est reçu par le destinataire escompté.
